(19) Europäisches Patentamt
European Patent Office
Office européen des brevets

(11) **EP 4 007 385 A1**

(12) **EUROPEAN PATENT APPLICATION**
published in accordance with Art. 153(4) EPC

(43) Date of publication:
**01.06.2022 Bulletin 2022/22**

(21) Application number: **19939173.1**

(22) Date of filing: **31.07.2019**

(51) International Patent Classification (IPC):
**H04W 56/00** $^{(2009.01)}$     **H04W 72/04** $^{(2009.01)}$

(52) Cooperative Patent Classification (CPC):
**H04W 56/00; H04W 72/04**

(86) International application number:
**PCT/JP2019/030076**

(87) International publication number:
**WO 2021/019743 (04.02.2021 Gazette 2021/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DoCoMo, Inc.**
**Tokyo 100-6150 (JP)**

(72) Inventors:
• **HARADA, Hiroki**
  **Tokyo 100-6150 (JP)**

• **NAGATA, Satoshi**
  **Tokyo 100-6150 (JP)**
• **MATSUMURA, Yuki**
  **Tokyo 100-6150 (JP)**
• **YOSHIOKA, Shohei**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL**

(57)     A terminal receives PDCCH in a difference frequency band such as FR4 that differs from a frequency band including FR1 and FR2. Specifically, the terminal receives the PDCCH having PTRS.

FIG. 10

REG = 12 subcarriers x 1 OFDM symbol

EP 4 007 385 A1

**Description**

TECHNICAL FIELD

The present invention relates to a terminal, and particularly, relates to a terminal that uses a phase tracking reference signal (PTRS).

BACKGROUND ART

The 3rd Generation Partnership Project (3GPP) specifies Long Term Evolution (LTE), and with the aim of further speeding, specifies LTE-Advanced (hereinbelow, the LTE includes the LTE-Advanced). Further, specifications for 5th generation mobile communication system (5G, also called as New Radio (NR) or Next Generation (NG)) are also being considered.

In Release 15 and Release 16 (NR) of the 3GPP, the operation of the bands up to 52.6 GHz is specified. In the specifications after Release 16, operation in a band exceeding 52.6 GHz has been studied (see Non-Patent Document 1). The target frequency range in Study Item (SI) is 52.6 GHz to 114.25 GHz.

In such case in which the carrier frequency is high, an increase in a phase noise becomes a problem. Therefore, in the NR, with an object of estimating the phase noise that becomes an issue in such high frequency band, the phase tracking reference signal (PTRS: Phase Tracking RS) has been stipulated newly as a reference signal (RS) dedicated to the terminal.

Concretely, in Release 15, in Frequency Range 2 (FR2, 24.25 GHz to 52.6 GHz), using Downlink (DL) / Uplink (UL) PTRS of one port has been stipulated as indispensable. Note that, in FR1 (410 MHz to 7.125 GHz), the PTRS is an option. Moreover, the PTRS of the DL is intended only for a downlink data channel (PDSCH: Physical Downlink Shared Channel).

However, when the carrier frequency is very high, for example, a carrier frequency that exceeds 52.6 GHz, an increase in phase noise and propagation loss becomes a serious problem. Such a carrier frequency is also more sensitive to Peak-to-Average Power Ratio (PAPR) and power amplifier nonlinearity.

For solving such problem, application of even larger Sub-Carrier Spacing (SCS) or a single carrier waveform can be considered.

PRIOR ART DOCUMENT

NON-PATENT DOCUMENT

Non-Patent Document 1: 3GPP TR 38.807 V0.1.0, 3rd Generation Partnership Project; Technical Specification Group Radio Access Network; Study on requirements for NR beyond 52.6 GHz (Release 16), 3GPP, March 2019

SUMMARY OF THE INVENTION

In a case of using a different frequency band differing from FR1/FR2, such as a high frequency band exceeding 52.6 GHz, as a method that can solve the abovementioned problem, for the DL, without restricting to the PDSCH, applying Discrete Fourier Transform - Spread (DFT-S-OFDM) having a high effect of reduction of the PAPR, intended for all channels can be considered.

In Release 15, since a downlink control channel (PDCCH: Physical Downlink Control Channel) and a downlink physical broadcast channel (PBCH: Physical Broadcast Channel) have a Demodulation reference signal (DRMS) in all symbols, the PTRS is not necessary.

However, in a case of DFT-S-OFDM, DMRS symbol and a payload symbol, being subjected to time division multiplexing (TDM), it is not possible to use an appropriate reference signal for detection of the PDCCH and the PBCH, and highly reliable detection of PDCCH and PBCH becoming difficult has been a concern.

The present invention has been made in view of such situation. One object of the present invention is to provide a terminal that is capable of realizing highly reliable detection of a channel in a downlink direction, even in a case of using a different frequency band differing from FR1/FR2.

According to one aspect of the present disclosure a terminal (UE 200) includes a receiving unit (radio signal transmitting and receiving unit 210) that receives a downlink channel including at least one of a downlink control channel (PDCCH) and a downlink physical broadcast channel (PBCH), in a different frequency band (e.g., FR4) differing from a frequency band including one frequency range or a plurality of frequency ranges (FR1, FR2). The receiving unit receives the downlink channel having a phase tracking reference signal (PTRS).

BRIEF DESCRIPTION OF DRAWINGS

FIG. 1 is an overall schematic configuration diagram of a radio communication system 10.
FIG. 2 is a diagram illustrating a frequency range used in the radio communication system 10.
FIG. 3 is a diagram illustrating a configuration example of a radio frame, a sub-frame, and a slot used in the radio communication system 10.
FIG. 4 is a functional block diagram of UE 200.
FIG. 5A is a diagram illustrating a configuration example ($L_{PT-RS}$ : 1) of DL/UL PTRS for CP-OFDM.
FIG. 5B is a diagram illustrating a configuration example ($L_{PT-RS}$ : 2) of the DL/UL PTRS for the CP-OFDM.
FIG. 5C is a diagram illustrating a configuration example ($L_{PT-RS}$ : 4) of the DL/UL PTRS for the CP-OFDM.
FIG. 6 is a diagram illustrating a configuration example of a PTRS for DFT-S-OFDM.
FIG. 7 is a diagram illustrating a configuration example of a conventional (Release 15) PDCCH.
FIG. 8 is a diagram illustrating a configuration example of a conventional (Release 15) PBCH.
FIG. 9 is a diagram illustrating an example in which a definition of CCE/REG bundle/REG is modified for maintaining RE size of DCI.
FIG. 10 is a diagram illustrating an example in which some of DMRSs are replaced by the PTRS for maintaining the RE size of the DCI.
FIG. 11 is a diagram illustrating an example of a hardware configuration of the UE 200.

MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

(1) Overall Schematic Configuration of Radio Communication System

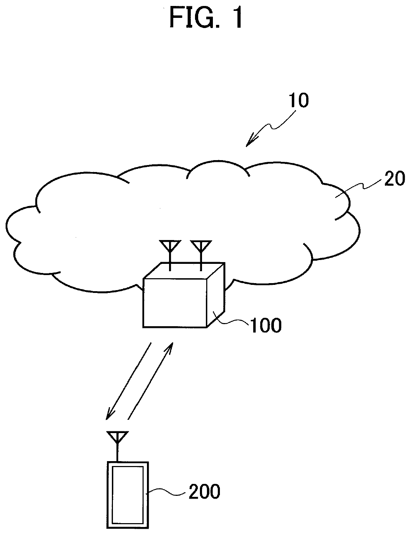

FIG. 1 is an overall schematic configuration diagram of a radio communication system 10 according to the present embodiment. The radio communication system 10 is a radio communication system according to 5G New Radio (NR). The radio communication system 10 includes Next Generation-Radio Access Network 20 (hereinafter, "NG-RAN 20") and a terminal 200 (hereinafter, "UE 200").

The NG-RAN 20 includes a radio base station 100 (hereinafter, "gNB 100"). A concrete configuration of the radio communication system 10, including the number of the gNBs and the UEs, is not limited to the example shown in FIG. 1.

The NG-RAN 20 actually includes a plurality of NG-RAN Nodes, in particular, the gNBs (or ng-eNB) . Also, the NG-RAN 20 is connected to a core network (5GC, not shown) according to the 5G. The NG-RAN 20 and the 5GC may be simply expressed as "network".

The gNB 100 is a radio base station according to the 5G. The gNB 100 performs a radio communication with the UE 200 according to the 5G. The gNB 100 and the UE 200 can handle, by controlling a radio signal transmitted from a plurality of antenna elements, Massive MIMO (Multiple-Input Multiple-Output) that generates a beam with a higher directivity, carrier aggregation (CA) that bundles a plurality of component carriers (CC) to use, dual connectivity (DC) in which communication is performed simultaneously between two NG-RAN Nodes and the UE, and the like.

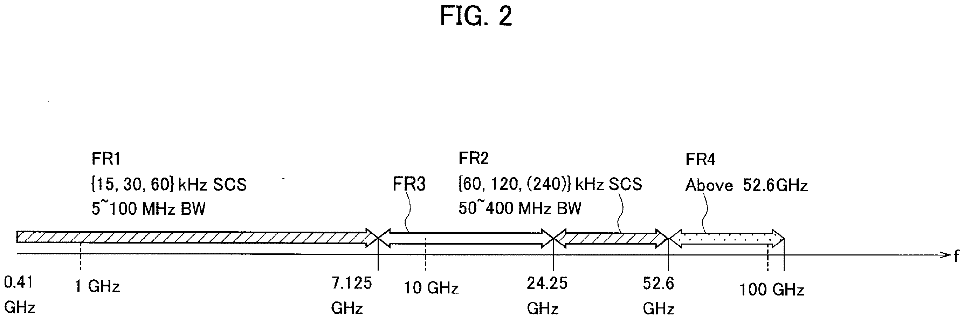

The radio communication system 10 corresponds to a plurality of frequency ranges (FR). FIG. 2 shows the frequency range used in the radio communication system 10.

As shown in FIG. 2, the radio communication system 10 corresponds to FR1 and FR2. The frequency band of each FR is as below.

• FR1: 410 MHz to 7.125 GHz
• FR2: 24.25 GHz to 52.6 GHz

In FR1, Sub-Carrier Spacing (SCS) of 15 kHz, 30 kHz, or 60 kHz is used, and a bandwidth (BW) of 5 MHz to 100 MHz is used. FR2 has a higher frequency than FR1. Moreover, FR2 uses SCS of 60 kHz or 120 kHz (240 kHz may be included), and uses a bandwidth (BW) of 50 MHz to 400 MHz.

Note that SCS may be interpreted as numerology. The numerology is defined in 3GPP TS38.300 and corresponds to one subcarrier spacing in the frequency domain.

Furthermore, the radio communication system 10 can handle a frequency band that is higher than the frequency band of FR2. Specifically, the radio communication system 10 can handle a frequency band exceeding 52.6 GHz and up to 114.25 GHz. Here, such a high frequency band is referred to as "FR4" for convenience. FR4 belongs to so-called EHF (extremely high frequency, also called millimeter wave) . FR4 is a temporary name and may be called by another name.

FR4 may be further classified. For example, FR4 may be divided into a frequency range of 70 GHz or less and a frequency range of 70 GHz or more. Alternatively, FR4 may be divided into more frequency ranges, and may be divided in frequencies other than 70 GHz.

Here, the frequency band between FR2 and FR41 is referred to as "FR3" for convenience. FR3 is a frequency band above 7.125 GHz and below 24.25 GHz.

In the present embodiment, FR3 and FR4 are different from the frequency band including FR1 and FR2, and are called different frequency bands.

Particularly, as described above, in a high frequency band such as FR4, an increase in phase noise between carriers becomes a problem. This may require application of a larger (wider) SCS or a single carrier waveform.

Also, a narrower beam (i.e., a larger number of beams) may be required due to increased propagation loss. In addition, since it is more sensitive to PAPR and power amplifier nonlinearity, a greater (wider) SCS (and/or fewer FFT points), a PAPR reduction mechanism, or a single carrier waveform may be required.

In order to address these issues, in this embodiment, when using a band exceeding 52.6 GHz, Cyclic Prefix-Orthogonal Frequency Division Multiplexing (CP-OFDM)/Discrete Fourier Transform - Spread (DFT-S-OFDM) having a larger Sub-Carrier Spacing (SCS) can be applied.

However, larger the SCS, a symbol/CP (Cyclic Prefix) period and a slot period become shorter (in a case in which a configuration of 14 symbols/slots is maintained).

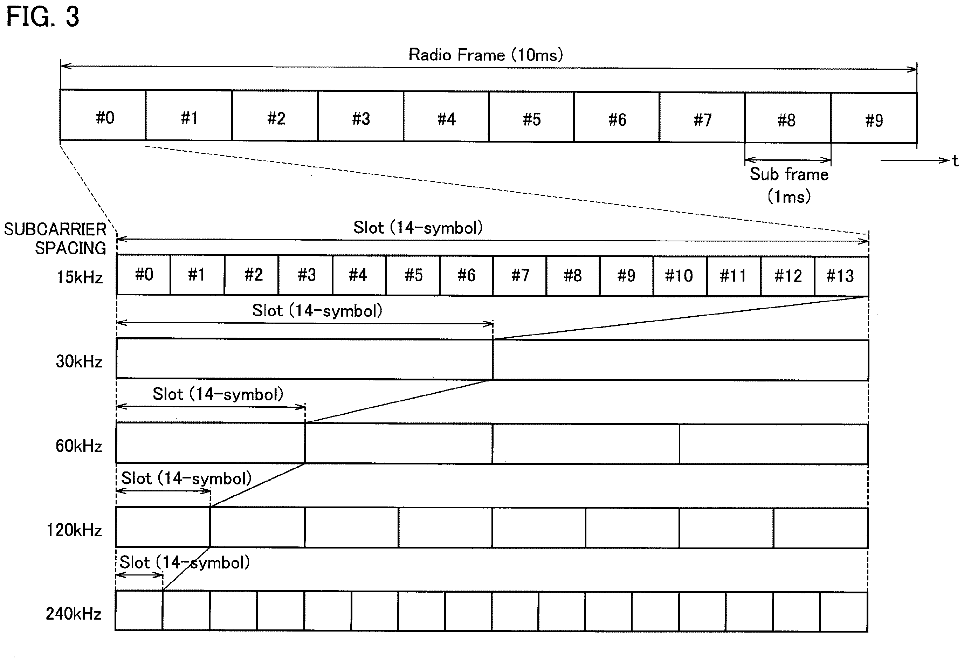

FIG. 3 illustrates a configuration example of a radio frame, a sub-frame, and a slot used in a radio communication system 10. Moreover, table 1 shows a relationship of and SCS and a symbol period.

[Table 1]

| SCS | 15 kHz | 30 kHz | 60 kHz | 120 kHz | 240 kHz | 480 kHz | 960 kHz |
|---|---|---|---|---|---|---|---|
| Symbol Period (Unit: $\mu$s) | 66.6 | 33.3 | 16.65 | 8.325 | 4.1625 | 2.08125 | 1.040625 |

As shown in Table 1, in a case in which the configuration of 14 symbols/slots is maintained, larger (wider) the SCS becomes, the symbol period (and the slot period) becomes shorter.

In the present embodiment, even in a case in which the SCS is made large in such manner, a mechanism that enables to suppress an increase in cost, complicating, and an increase in electric power consumption of the UE 200 is provided.

Moreover, in the present embodiment, particularly, with an object of estimation of a phase noise which becomes an issue in a high frequency band such as FR4, a phase tracking reference signal (PTRS: Phase Tracking Reference Signal) is used as a reference signal (RS) dedicated to the UE 200. The phase noise can be expressed as a phase fluctuation that occurs due to a frequency component other than a carrier frequency for a locally-generated signal.

It is preferable that the PTRS is used in a frequency band equivalent to FR2 and higher, and may be used in FR3 (or FR1). In the present embodiment, a configuration of the PTRS to be used may differ according to the frequency band.

In the present embodiment, the PTRS not only can apply a downlink data channel (PDSCH: Physical Downlink Shared Channel) and an uplink data channel (PUSCH: Physical Downlink Shared Channel), but also can apply a downlink control channel (PDCCH: Physical Downlink Control Channel) and a down link physical broadcast channel (PHCH: Physical Broadcast Channel).

Moreover, in the present embodiment, a plurality of carrier waveforms may be supported by these downlink channels. Specifically, the carrier waveforms include CP-OFDM waveform, DFT-S-OFDM waveform, or a single carrier waveform and the like. Note that, the carrier waveform may be replaced by a secondary modulation system, or presence or absence of a transform precoding.

(2) Functional Block Configuration of Radio Communication System

Next, a functional block configuration of the radio communication system 10 will be explained. Specifically, a functional block configuration of the UE 200 will be explained.

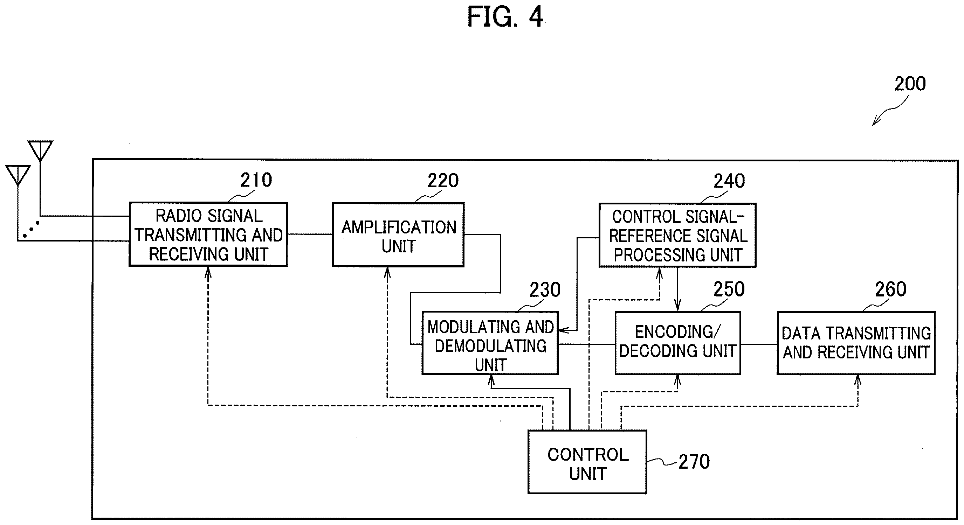

FIG. 4 is a functional block diagram of the UE 200. As shown in FIG. 4, the UE 200 includes a radio signal transmitting and receiving unit 210, an amplification unit 220, a modulating and demodulating unit 230, a control signal - reference signal processing unit 240, an encoding/ decoding unit 250, a data transmitting and receiving unit 260, and a control unit 270.

The radio signal transmitting and receiving unit 210 transmits and receives a radio signal according to the NR. The radio signal transmitting and receiving unit 210 corresponds with Massive MIMO, CA that uses a bundle of CCs, and DC and the like that performs communication simultaneously between the UE and two NG-RAN Nodes respectively.

In the present embodiment, the radio signal transmitting and receiving unit 210 is capable of receiving a downlink channel in a different frequency band (FR3, FR4) that differs from a frequency band including one or a plurality of frequency ranges (FR1, FR2).

Specific channels will be further described later, and particularly, in the present embodiment, the radio signal transmitting and receiving unit 210 is capable of receiving a downlink channel including at least one of a downlink control channel (PDCCH) and a downlink physical broadcast channel (PBCH). In the present embodiment, the radio signal transmitting and receiving unit 210 constitutes a receiving unit.

The radio signal transmitting and receiving unit 210 is capable of receiving the downlink channel having the PTRS. Specifically, the radio signal transmitting and receiving unit 210 is capable of receiving the PDCCH having the PTRS for the PDCCH and/or the PBCH having the PTRS for the PBCH.

Note that, only one of the PDCCH or the PBCH may have the PTRS. Moreover, although 'have PTRS' for instance, as it will be described later, signifies that the PTRS for the downlink channel is allocated to a symbol same as a symbol to which the downlink channel is allocated (may be referred to as OFDM symbol), it is not necessarily restricted to such configuration. That is, the PTRS for the downlink may be allocated to a position different from a position to which the downlink channel is allocated, in at least one of a time domain (may be referred to as time direction, symbol period, or symbol time and the like) and a frequency domain (may be referred to as frequency direction, resource block, sub-carrier, BWP (Bandwidth part) and the like).

In the present embodiment, the PTRS for the downlink channel may be inserted into a symbol to which the downlink channel is allocated. Here, 'be inserted into a symbol' may mean that it is allocated to a symbol same as the downlink channel (a position in the time direction), but is allocated to a different position in the frequency domain.

Moreover, the configuration of the PTRS for the downlink channel, specifically, the position of the PTRS in the time domain and the frequency domain may have been defined in advance (predefined) by specifications of the 3GPP. That is, in a case in which the configuration of the PTRS are predefined in such manner, the configuration may not be notified to the UE 200 by signaling and the like of an uplink layer (for example, radio resource control layer (RRC)).

Whereas, in a case in which, the configuration of the PTRS have not been predefined, the radio signal transmitting and receiving unit 210 is capable of receiving configuration information indicating the configuration of the PTRS. The configuration information, as mentioned above, can be notified to the UE 200 by signaling of an upper layer or a system information block (SIB).

Moreover, as mentioned above, in the downlink channel, a plurality of carrier waveforms (CP-OFDM waveform, DFT-S-OFDM waveform, or single carrier waveform and the like) may be supported. The PTRS for the downlink channel may be configured according to the type of the carrier waveform. The radio signal transmitting and receiving unit 210 is capable of receiving the downlink channel (PDCCH, PBCH) having the PTRS configured according to the type of the carrier waveform.

Moreover, the radio signal transmitting and receiving unit 210 may transmit and receive the radio signal by using a slot for which the number of symbols has become larger than the number of symbols in a case of using FR1 or FR2. Note that, the number of symbols, specifically, is the number of OFDM symbols in a slot illustrated in FIG. 3.

The amplification unit 220 includes a PA (Power Amplifier) / LNA (Low Noise Amplifier) and the like. The amplification unit 220 amplifies a signal output from the modulating and demodulating unit 230 to a predetermined power level. Moreover, the amplification unit 220 amplifies an RF signal output from the radio signal transmitting and receiving unit 210.

The modulating and demodulating unit 230 performs data modulation/demodulation, transmission power setting, and resource block allocation, and the like.

In the present embodiment, it is possible to apply the CP-OFDM and the DFT-S-OFDM. Particularly, in the present embodiment, it is possible to use the DFT-S-OFDM not only for the uplink (UL) but also for the downlink DL. Furthermore, the DFT-S-OFDM, as it will be described later, may be applied to all the downlink channels.

In the DFT-S-OFDM, in a case of a transmission side, a precoding called as transform precoding by discrete Fourier transform (DFT) is performed. For instance, the transform precoding is performed after the modulation and layer mapping, and before multi-antenna precoding.

Note that, the transform precoding may be expressed simply as DFT precoding or precoding to be applied to the DFT.

The control signal - reference signal processing unit 240 performs processing related to various control signals transmitted and received by the UE 200 and processing related to various reference signals transmitted and received by the UE 200.

Specifically, the control signal - reference signal processing unit 240 receives various control signals transmitted from the gNB 100 via a predetermined control channel, such as a control signal of a radio resource control layer (RRC). Moreover, the control signal - reference signal processing unit 240 transmits various control signals toward the gNB 100 via a predetermined control channel.

The control signal - reference signal processing unit 240 executes processing by using reference signals (RS) such as Demodulation reference signal (DMRS) and Phase Tracking Reference Signal (PTRS).

The control signal - reference signal processing unit 240 executes processing by using reference signals (RS) such as Demodulation reference signal (DMRS) and Phase Tracking Reference Signal (PTRS).

The DMRS is a known reference signal (pilot signal) for estimating a fading channel used for data demodulation between a base station specific for a terminal and the terminal. PTRS is a terminal-specific reference signal for the purpose of estimating phase noise which is an issue in the high frequency band.

The reference signal includes, apart from DMRS and PTRS, Channel State Information-Reference Signal (CSI-RS) and Sounding Reference Signal (SRS).
A channel includes a control channel and a data channel. A control channel includes PDCCH (Physical Downlink Control Channel), PUCCH (Physical Uplink Control Channel), RACH (Random Access Channel, Downlink Control Information (DCI) including Random Access Radio Network Temporary Identifier(RA-RNTI)), PBCH (Physical Broadcast Channel), and the like.

A data channel includes PDSCH (Physical Downlink Shared Channel), PUSCH (Physical Downlink Shared Channel), and the like. Data means data transmitted via a data channel.

The encoding/decoding unit 250 performs division/linking of data and channel coding/decoding for each predetermined destination of communication (the gNB 100 or other gNB).

Specifically, the encoding/decoding unit 250 divides data output from the data transmitting and receiving unit 260 into a predetermined size, and performs channel coding on data that has been divided. Moreover, the encoding/decoding unit 250 decodes data output from the modulating demodulating unit 230, and links the data decoded.

The data transmitting and receiving unit 260 transmits and receives Protocol Data Unit (PDU) and Service Data Unit (SDU). Specifically, the data transmitting and receiving unit 260 executes PDU/SDU assembly/disassembly and the like in multiple layers (such as medium access control layer (MAC), radio link control layer (RLC), and packet data convergence protocol layer (PDCP)).

The control unit 270 controls each functional block in the UE 200. Particularly, in the present embodiment, the control unit 270 processes a signal received by using the PTRS received from the gNB 100. Specifically, the control unit 270, by using the PTRS received, estimates a phase noise included in a radio signal received, and corrects a phase of the radio signal received, on the basis of an estimation result.

More specifically, the control unit 270, with regard to the DL, is capable of correcting the phase of the radio signal received via the downlink channel, by using the PTRS for the PDCCH and/or the PTRS for the PBCH.

(3) Operation of Radio Communication System

Next, an operation of the radio communication system 10 will be explained. Specifically, an operation by the UE 200 using the PTRS (phase tracking reference signal) will be explained.

Note that, in the following explanation of the operation, the explanation is made with a frequency range exceeding 52.6 GHz and up to 114.25 GHz (FR4) as an example, a configuration of a similar PTRS or processing related to similar PTRS may be applied to other frequency ranges such as FR3.

In the description below, an operation of the UE 200 (terminal) assuming reception of the PTRS for the downlink channel, specifically, the PTRS for the PDSCH, the PDCCH, and the PBCH, in a high frequency band such as FR4 will be explained.

(3.1) Basic Configuration of PTRS

To begin with, a basic configuration of the PTRS including contents stipulated in Release 15 of the 3GPP will be explained. As mentioned above, in Release 15, a DL/UL PTRS of one port is supported. The DL/UL PTRS is indispensable in FR2, and is an option in FR1. Moreover, support of the UL PTRS of two ports and recommendation of a density (spacing of arrangement in the time direction and the frequency direction) of the DL/UL PTRS are options.

The UE 200 reports to the network, a preferable Modulation and Coding Scheme (MCS) and a threshold value of a band width on the basis of a capability of the UE in a carrier frequency to be used.

The DL PTRS has the following features.

- sequence generation: is similar to the DMRS of the PDSCH
- density in the frequency direction (frequency density) : {0, 2, 4} (is a function of a bandwidth scheduled)
- density in the time direction (time density): {0, 1, 2, 4} (is a function of an MCS scheduled)

- resource element offset according to an associated DMRS antenna port is applied, and, the UL PTRS has the following features.
- in a case in which the transform precoding is disabled, the DL PTRS is almost similar
- a case in which the transform precoding is enabled
- a pattern of a PTRS group applied (is a function of a bandwidth scheduled)
- time density: {1, 2}

(3.1.1) Configuration Examples of PTRS

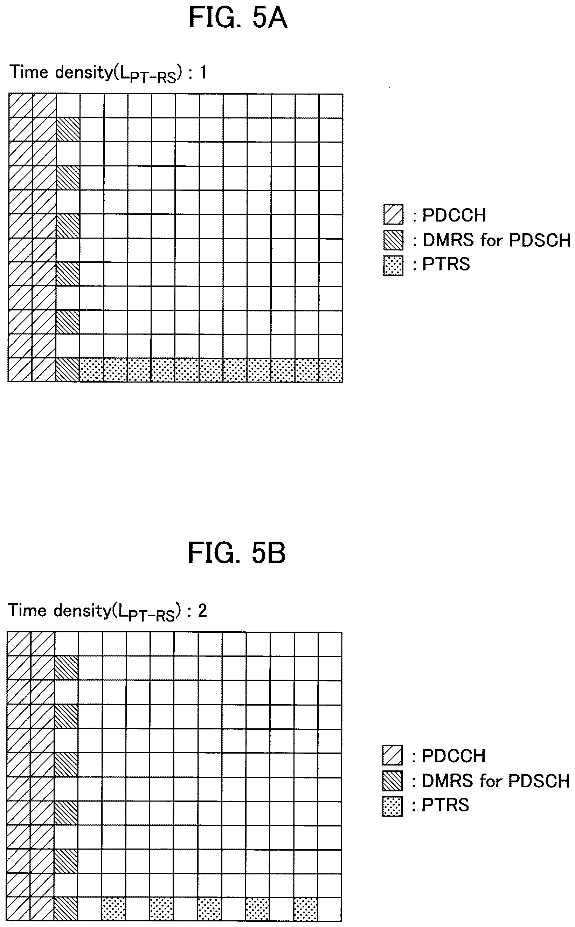

FIG. 5A to FIG. 5C illustrate configuration examples (Part 1) of the PTRS according to the abovementioned basic configuration of the PTRS of Release 15. Specifically, FIG. 5A illustrates a configuration example ($L_{PT-RS}$ : 1) of the DL/UL PTRS for the CP-OFDM. As shown in FIG. 5A, in a PRB (hereinafter, abbreviated as RB) area, the time density ($L_{PT-RS}$) of the PTRS is '1', and the PTRS is disposed in all the RBs (may be expressed as symbols) in the time direction (horizontal-axis direction, same applies hereinafter). Whereas, the frequency density ($K_{PT-RS}$) of the PTRS is '2', and the PTRS, in the frequency direction (vertical-axis direction, same applies hereinafter), is disposed for every 2RBs (may be expressed as sub-carrier) . In FIG. 5A to FIG. 5C, a position of the DMRS for the PDCCH and the PDSCH is also indicated.

Note that, the $L_{PT-RS}$ and the $K_{PT-RS}$ can be expressed as follows.

- $L_{PT-RS}$ : 1 (ptrs-MCS3<=$I_{MCS}$<ptrs-MCS4)
- $K_{PT-RS}$ : 2 ($N_{RB0}$<=$N_{RB}$<$N_{RB1}$)

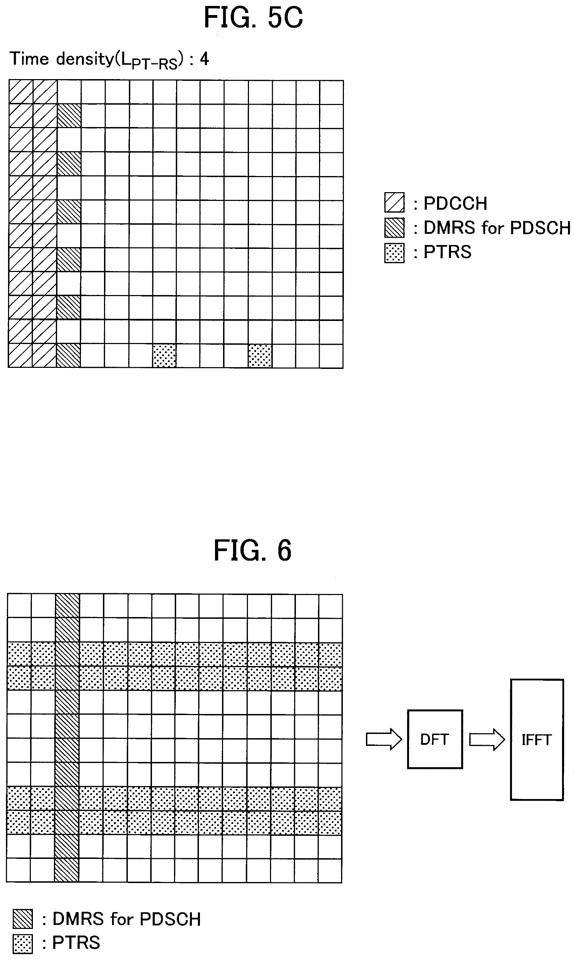

FIG. 5B illustrates a configuration example ($L_{PT-RS}$ : 2) of the DL/UL PTRS for the CP-OFDM, and FIG. 5C illustrates a configuration example ($L_{PT-RS}$ : 4) of the DL/UL PTRS for the CP-OFDM. In FIG. 5B, the PTRS, in the time direction, is disposed for every 2RBs. Moreover, in FIG. 5C, the PTRS, in the time direction, is disposed for every 4RBs.

FIG. 6 illustrates a configuration example (Part 2) of the PTRS according to the basic configuration of the PTRS in Release 15. Specifically, FIG. 6 illustrates a configuration example of the PTRS for the DFT-S-OFDM. Use in the UL is let to be a prerequisite for the PTRS.

As illustrated in FIG. 6, the PTRS is inserted into the time domain before spread by the DFT. In the configuration example illustrated in FIG. 6, each of the $L_{PT-RS}$ is '1', and the number of PTRS groups and the number of samples per PTRS group is '2' (indicated as {2, 2} ($N_{RB0}$<=$N_{RB}$<$N_{RB1}$)).

(3.1.2) Issues

In a case in which the configuration of the PTRS such as the abovementioned configuration is applied to a high frequency band such as FR4, the following issues are to be concerned.

- the phase noise becomes further larger
- propagation loss becomes further larger, and narrower beam (that is, even larger number of beams) becomes necessary
- becomes more sensitive to nonlinearity of the PAPR and the PA

Therefore, even wider SCS (and/or even smaller number of FFT points), a PAPR reducing mechanism, or a single carrier waveform become necessary. When such issues are taken into consideration, one possibility of a waveform in the high frequency band such as FR4, is the application of the DFTS-OFDM to all the downlink channels.

Although 'all the downlink channels' in this case is intended for all downlink physical channels, it may not be necessarily all downlink channels. Specifically, the PDSCH, PDCCH, and the PBCH are to be included.

In Release 15 (FR1, FR2), since the PDCCH and the PBCH have a DMRS in all the symbols, the PTRS can be said to be unnecessary. However, in a case of the DFT-S-OFDM, the DMRS symbol and the payload symbol are subjected to time division multiplexing (TDM). Here, the 'payload symbol' may include symbols for the PDSCH, the PDCCH, and the PBCH.

In Release 15 (FR1, FR2), the DL PTRS has been defined only with respect to the PDSCH. Moreover, as mentioned above, the PTRS is an option, and only in a case of being configured, processing of receiving signal using the PTRS is performed.

Accordingly, the DFT-S-OFDM (that is, transform precoding) is applied, and in a case in which the DMRS symbol and the payload symbol are separated by the TDM, it is not possible to use an appropriate reference signal for detection of the PDCCH and the PBCH, and highly reliable detection of the PDCCH and the PBCH may become difficult.

In the present embodiment, in order to eliminate such problems, a PTRS for the PDCCH and the PBCH are applied.

### (3.2) PTRS for PDCCH and PBCH

A configuration of the PTRS for the PDCCH and the PBCH will be explained below. Specifically, the configuration of the PTRS for the PDCCH and the PBCH will be explained while explaining a conventional configuration of the PDCCH and the PBCH.

More specifically, a PTRS sequence for the PDCCH, a PTRS mapping for the PDCCH, an increase in the PTRS electric power, and the PTRS for the PBCH will be explained.

### (3.2.2) Conventional Configuration of PDCCH and PBCH

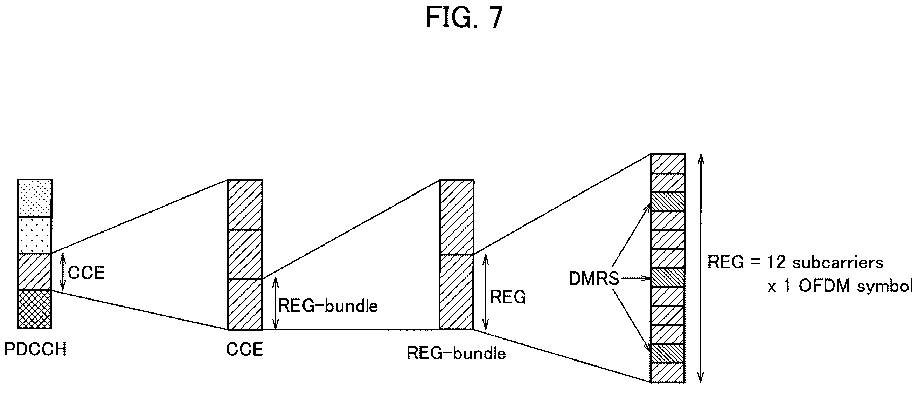

FIG. 7 illustrates a configuration example of the conventional (Release 15) PDCCH. As shown in FIG. 7, the PDCCH includes a plurality of Control Channel Elements (CCE). The CCE may be referred to as a control channel element.

The CCE includes a plurality of Resource Element Groups (REG) . The number of REG bundles in the CCE may be varied.

One REG bundle includes a plurality of REGs. A bundle size is specified by a parameter (L). 'L' is determined by RRC parameters (red-bundle-size).

One REG includes one resource block (12 resource elements, sub-carriers in the frequency domain), and one OFDM symbol in the time domain.

Moreover, an aggregation level indicates as to how many CCEs are allocated for the PDCCH. The aggregation level and the number of CCEs allocated are stipulated in version 7.3 of 3GPP TS38.211.

It is possible to configure the PDCCH in a range shown below.

- the number of OFDM symbols: 1 to 3
- aggregation level (the number of CCEs): 1, 2, 4, 8, 16
- REG bundle size (the number of REGs per REG bundle): 2, 3, 6

Note that, a Control Resource Set (CORESET) includes a multiple number of resource blocks in the frequency domain (that is, multiple of 12 REs) and one of one to three OFDM symbols in the time domain.

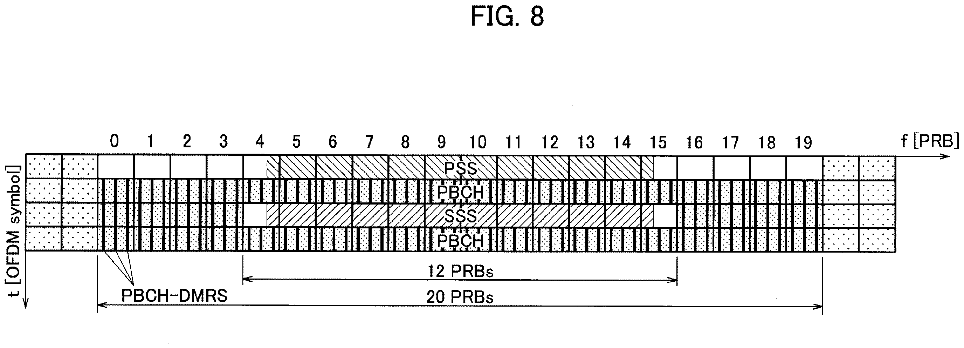

FIG. 8 illustrates a configuration example of the conventional (Release 15) PBCH. As illustrated in FIG. 8, the PBCH forms a synchronization signal (SS) and a synchronization signal block (SSB) .

Specifically, the synchronization signal includes two signals, a primary synchronization signal (PSS: Primary SS) and a secondary synchronization signal (SSS: Secondary SS), and forms an SS/PBCH block (SSB) as indicated in FIG. 8, together with the PBCH and the DMRS for PBCH.

Note that, as shown in FIG. 8, even in the same OFDM symbol, PBCH-DRMS has not been allocated to the domain to which the SSS has been allocated, and a state in which the DMRS has been missing is assumed.

The gNB 100 provides significant functions of initial access and mobility such as detection of cells, establishing of frame synchronization, measurement of downlink reception quality, broadcast of system parameters necessary for other broadcast information reception, to the UE 200 (terminal) by using the SSB.

### (3.2.2) Examples

As mentioned above, in the present embodiment, the PTRS for the downlink channel is applied for realizing a highly reliable PDCCH and/or PBCH in a high frequency domain such as FR4 and the like.

In the following examples, the PTRS to be used for correction of a phase of the PDCCH and/or PBCH is defined. Specifically, at least one of or a plurality of configurations related to the PTRS shown below may be applied.

(i) The PTRS does not include the DMRS, and is inserted into the PDCCH or the PBCH symbol. That is, the PTRS is allocated to a same symbol as the PDCCH (PBCH) (however, a position in a different frequency domain).

(ii) Existence/configuration of the PTRS for the PDCCH is defined in advance (predefined) (for example, for each frequency range), or is provided via signaling of an upper layer (one of or both of the SIB and the RRC) . A monitoring opportunity (MO) of the PDCCH may depend on a common search space (CSS) or the aggregation level.

Moreover, in the initial access of the terminal, for the existence/configuration of the PTRS, configuration of default may be defined.

(iii) Existence/configuration of the PTRS for the PBCH may be defined in advance (predefined) and/or may depend on the synchronization signal (SS).

For example, it includes a case of depending on the sequence of the PSS and/or the SSS, or the resource of the PSS and/or the SSS.

(iv) In a case in which, the plurality of carrier waveforms is supported as for the PDCCH and/or the PBCH, the existence/configuration of the PTRS may be determined according to the carrier waveform used in the PDCCH/PBCH.

(3.2.2.1) PTRS Sequence for PDCCH

A sequence of the PTRS for the PDCCH may be according to at least one of the following options.

- (Option 1) : similar to the sequence and the DMRS for the PDCCH in Release 15, or to apply upon performing some sort of update
- For example, in a case in which a parameter (pdcch-PTRS-ScramblingID) of the upper layer is provided, according to the parameter, $N_{ID} \in \{0, 1, ..., 65535\}$ is imparted.
- For example, in a case in which a parameter (DMRS-ScramblingID) of the upper layer is provided, and a parameter (pdcch-PTRS-ScramblingID) of the upper layer is not provided, according to DMRS-ScramblingID, $N_{ID} \in \{0, 1, ..., 65535\}$ is imparted.

Note that, pdcch-PTRS-ScramblingID may be set for each search space or CORESET, or pdcch-DMRS-ScramblingID set for each CORESET of Release 15 may be reused.

- for example, in a case other that the aforementioned cases, $N_{ID}^{cell}$ is used
- (Option 2) : The PTRS sequence for the PDCCH may be generated on the basis of at least one of the following.
- orthogonal sequence wi(m)
- spreading factor (SF)
- monitoring opportunity (MO) of PDCCH
- CORESET/search space
- slot number in radio frame
- cell ID

By generating the PTRS sequence for the PDCCH on the basis of such parameters, it is possible to facilitate reduction in inter-cell interference.

(3.2.2.2) Mapping of PTRS for PDCCH

Mapping of the PTRS for the PDCCH on the PDCCH resource may be according to at least one of the following options.

(3.2.2.2.1) Frequency Domain

- (Option 1): mapping to a specific sub-carrier of a symbol transmitting Downlink Control Information (DCI) without the DMRS in all the PRBs
- For example, for resource element (k, 1), index k of a sub-carrier for which the mapping of the PTRS is performed may be k = 0.
- For example, for resource element (k, 1), the index k of the sub-carrier for which the PTRS is subjected to mapping may be k = 4n + m (n = 0, 1, ...) (m: offset).
- For example, it is possible to perform mapping of the PTRS to an adjacent sub-carrier (for example, k = 4n, 4n + 1).
- (Option 2): mapping to a specific sub-carrier of a symbol that transmits the DCI without the DMRS in some PRBs
- For example, the density may be defined by specifications (k = 4n + m + N_SC (the number of sub-carriers) * 2).
- For example, the density may be determined by the parameters of the upper layer (k = 4n + N_SC* K_PTRS, K_PTRS intended for arrangement of each of K number of PRBs).
- For example, the density may be determined on the basis of a modulation order.

For example, in a case of QPSK, it is possible to let k = 2n + m + N_SC∗2. In a case of $\pi$/2-BPSK, it is possible to let k = 4n + m +N_SC∗2.

- The PTRS may be subjected to mapping to the adjacent sub-carrier.

For example, it is possible to let k = 4n + m +N_SC∗K_PTRS or 4n + 1 + m + N_SC∗K_PTRS.

- (Modified example): A modified example shown below may be applied.
- a case in which all the CCEs have the PTRS (a case in which the PTRS exists)

PTRS resource/density (resource used in the PTRS) of each CCE index is let to be common for maintaining the same number of REs for the PDCCH.

- limited CCEs have the PTRS (for each of X number of CCE indices)

For example, in a case in which only CCEs of even-numbered CCE indices have the PTRS, when the aggregation level = 1, that CCE may not have the PTRS, but when the aggregation level > 1, that CCE may have the PTRS all the time.

According to such mapping of the PTRS on the basis of the CCE (REG bundle), by the network selecting the CCE to be used, it is possible to select whether or not the PTRS is to be used. Note that, an encoding rate being low, it is possible to improve a performance of the PDCCH in a case of not using the PTRS. Whereas, when the PTRS is used, it is possible to improve a processing performance of the phase noise.

(3.2.2.2.2) Time Domain

- (Option 1): mapping to all symbols that transmit the DCI without the DM-RS
- For example, in the DM-RS, 1 may be 1 = 0, in the PDCCH, 1 may be 1 = 0 to 3, in the PTRS, 1 may be 1 = 1 to 3.
- (Option 2): mapping to some symbols that transmit the DCI without the DM-RS
- for example, the density may be defined by specifications (1 = 2i + j) (j: offset)
- for example, the density may be determined by parameters of the upper layer (1 = i ∗ L_PTRS + j)
- For example, the density may be determined on the basis of the modulation order.

For example, in a case of the QPSK, it is possible to let 1 = 2i + j. Moreover, in a case of $\pi/2$-BPSK, it is possible to let 1 = 4i + j.

Moreover, the PTRS may have been punctured (the DCI symbol subjected to mapping overwritten by a PTRS symbol), or it is possible to perform mapping of the DCI in order that a collision with the PTRS is avoided (that is, mapping of a DCI symbol for symbols excluding symbols for the PTRS mapping, by rate mapping).

- (Modified Example): A modified example shown below may be applied
- the DCI can collide with the PTRS

In this case, hopping of a search space without being changed, the definition of the REG or the CCE, REG bundle may not be changed.

Moreover, the search space may be subjected to hopping in order to avoid collision with the PTRS (the DCI does not collide with the PTRS). A monitoring size of the RE used in the DCI may be same irrespective of the presence or absence of the PTRS. A definition of the REG or the REG bundle and the CCE may be changed for maintaining the RE size of the DCI. Or, for maintaining the RE size of the DCI, some DMRSs may be replaced by the PTRSs.

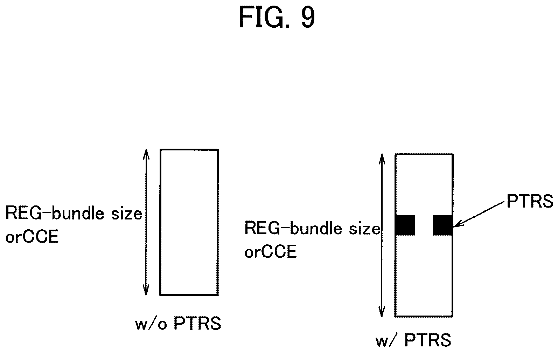

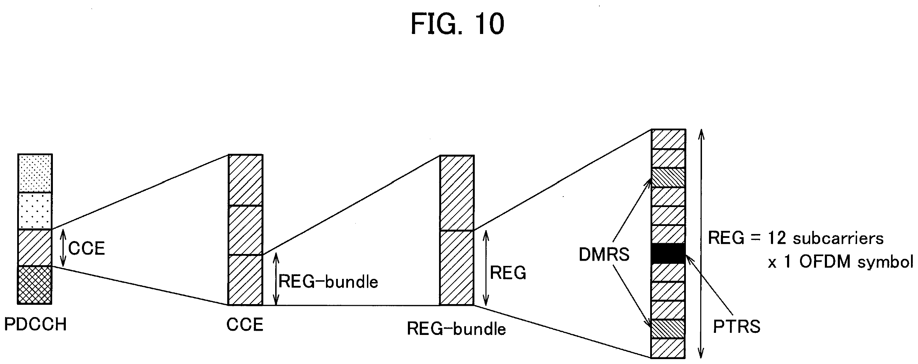

FIG. 9 and FIG. 10 are explanatory diagrams of the abovementioned modified examples. Specifically, FIG. 9 is a diagram illustrating an example in which a definition of the CCE / REG bundle / REG is modified for maintaining the RE size of the DCI. FIG. 10 illustrates an example in which some of DMRSs are replaced by the PTRS for maintaining the RE size of the DCI.

As shown in FIG. 9, the size of the REG bundle or the CCE is varied according to the presence or absence of the PTRS. Moreover, as shown in FIG. 10, for maintaining the RE size of the DCI, some of the DMRSs are replaced by the PTRS (FIG. 7 is also to be referred to) .

(3.2.2.3) Increase in PTRS Electric Power

The electric power of the PTRS for the PDCCH may be in accordance with at least one of the following options.

- (Option 1): the electric power of the PTRS is same as the electric power of the PDCCH

That is, in a case of a PTRS associated with the PDCCH, the UE 200 (terminal) assumes that a ratio of the PDCCH EPRE with respect to PTRS EPRE (Energy Per Resource Element) is 0 dB.

- (Option 2) : make the electric power of the PTRS higher than the electric power of the PDCCH

That is, regarding the PTRS associated with the PDCCH, the UE 200 (terminal) assumes that the ratio of the PDCCH EPRE with respect to the PTRS EPRE can be other than 0 dB. For instance, in a case in which the terminal has been set by a parameter "epre-Ratio of the upper layer, the ratio of the PTRSEPRE with respect to the PDCCH EPRE per RE of a PTRP port is imparted by "epre-Ratio".

Moreover, for instance, a scaling factor $\beta_{PTRS}$ of the PTRS is imparted by $\beta_{PTRS} = 10^{epre-Ratio/20}$.

In cases other that the aforementioned case, the terminal may assume that epre-Ratio has been set to a state '0'. Moreover, or, for instance, a ratio of the PTRSEPRE with respect to the PDCCH EPRE per RE of the PTRS port may be one specific value (for example, -3 dB) defined by specifications.

- (Option 3): the electric power of the PTRS is defined as a ratio with respect to a synchronization signal (SS) and/or PBCH EPRE

Note that, similarly as the case of options 1 and 2, the PTRSEPRE may be same as or may differ from the SS and/or PBCH EPRE.

(3.2.2.4) PTRS for PBCH

The PTRS for the PBCH may be defined as follows.

- (PT-RS Sequence for PBCH)
- (Option 1): let to be similar to a sequence of the DMRS for the PBCH in Release 15

[Numerical Expression 1]

$$c_{init} = 2^{11} \left( \bar{i}_{SSB} + 1 \right) \left( \left\lfloor N_{ID}^{cell}/4 \right\rfloor + 1 \right) + 2^{6} \left( \bar{i}_{SSB} + 1 \right) + \left( N_{ID}^{cell} \bmod 4 \right)$$

**(FORMULA 1)**

- (Option 2): differs from the sequence of the DMRS for the PBCH in Release 15, and is generated on the basis of at least one of the following
- cell ID
- index of the DMRS sequence for the PBCH (that is, a part of the SSB index)
- (PTRS mapping for the PBCH)
- (frequency domain)

  - (Option 1): mapping to a specific sub-carrier (predefined in specifications) of a symbol that transmits the PBCH without the DMRS in all the PRBs
  - (Option 2): mapping to a specific sub-carrier (predefined in specifications) of a symbol that transmits the PBCH without the DMRS in some of the PRBs

- (time domain)

  - (Option1): all symbols (predefined in specifications) that transmit the PBCH without the DMRS

  - (Option 2): some of the symbols (predefined in specifications) that transmit the PBCH without the DMRS

Moreover, the payload of the PBCH are subjected to mapping in order to avoid collision with the PTRS (that is, rate mapping) . Note that, similar to the PTRS of the PDCCH, the payload of the PBCH may be punctured.

- (Increase in Electric Power of PTRS for PBCH)
- (Option 1): electric power of the PTRS is same as the electric power of the PBCH
- (Option 2): electric power of the PTRS is higher than the electric power of the PBCH

A ratio of the PTRSEPRE with respect to the PBCHEPRE per RE of the PTRS port may be defined as one specific value that has been defined by the specifications.

- (Option 3): electric power of the PTRS is defined as a ratio with respect to the SSE EPRE

Similar to the cases of options 1 and 2, the PTRSEPRE may be same as or may differ from the SSS EPRE.

(4) Advantageous Effects

According to the abovementioned embodiment, the following advantageous effects are achieved. The UE 200 according the present embodiment is capable of receiving a downlink channel having the PTRS, specifically, the PDCCH and/or PBCH having the PTRS.

Therefore, even in a case in which the different frequency band differing from FR1/FR2 is used, and the DFT-S-OFDM is applied, the DMRS symbol and the payload symbol are subjected to time division multiplexing (TDM), and by using the PTRS, it is possible to realize a highly reliable detection of a channel in the downlink direction.

In the present embodiment, it is possible to insert the PTRS into the symbol allocated by the downlink channel (PDCCH and/or PBCH) . Accordingly, since the PTRS is positioned in the same symbol as the downlink channel, it is possible to realize detection of channel in the downlink direction with even higher reliability.

Moreover, the configuration of the PTRS (such as the position of the PTRS in the time domain and the frequency domain) may be defined in advance by the specifications of the 3GPP. Accordingly, the UE 200, without receiving signaling related to the PTRS separately, is capable of assuming the PTRS, and is useful particularly in an initial access.

Or, configuration information indicating the configuration of the PTRS may be subjected to signaling. Accordingly, it is possible to realize more flexible configuration of the PTRS appropriate for the state and the like of the radio communication system 10.

In the present embodiment, the PTRS may be configured according to the type of a carrier waveform. Accordingly, it is possible to configure an appropriate PTRS suitable for the carrier waveform (such as single carrier waveform and the like).

(5) Other Embodiments

Although the contents of the present invention have been described by way of the embodiments, it is obvious to those skilled in the art that the present invention is not limited to what is written here and that various modifications and improvements thereof are possible.

For instance, in the abovementioned embodiment, although the explanation with an example of a high frequency band such as FR4, that is, the frequency band exceeding 52.6 GHz has been made, the abovementioned configuration of the PTRS may be applied to other frequency range such as FR3.

Furthermore, as explained above, FR4 may be divided into a frequency range of 70 GHz or lower, and a frequency range of 70 GHz or higher, and the correspondence between the configuration of the PTRS and the frequency range such as the abovementioned configuration of the PTRS is applied to the frequency range of 70 GHz and higher, and the configuration of the PTRS is partially applied (for example, only the PDCCH) to the frequency range of 70 GHz and lower, may be changed as deemed appropriate.

Moreover, the block diagram used for explaining the embodiments (FIG. 4) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

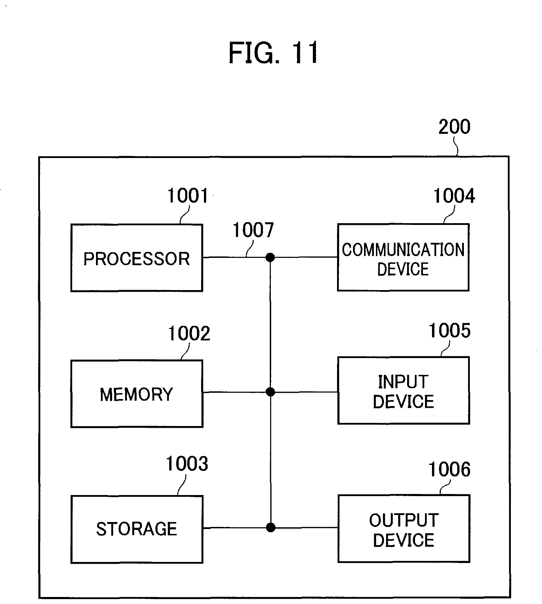

Furthermore, the UE 200 explained above can function as a computer that performs the processing of the radio communication method of the present disclosure. FIG. 11 is a diagram illustrating an example of a hardware configuration of the UE 200. As shown in FIG. 11, the UE 200 can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the UE 200 (see FIG. 4) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the UE 200 by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission/reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto) . In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer) . It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling) . Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS) ", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE) ", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type) . At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same) . For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may be composed of one or more frames in the time domain. Each frame or frames in the time domain may be referred to as a subframe.

A subframe may be further configured by one or more slots in the time domain. The subframe may have a fixed time length (e.g., 1 ms) that does not depend on the numerology.

Numerology may be a communication parameter applied to at least one of transmission and reception of a certain signal or channel. The numerology can include one among, for example, subcarrier spacing (Sub-Carrier Spacing: SCS), bandwidth, symbol length, cyclic prefix length, transmission time interval (TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in a time unit larger than a minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one between a subframe and TTI may be a subframe (1 ms) in existing LTE, or may be shorter than 1 ms (for example, 1 to 13 symbols), or a period longer than 1 ms. Note that, a unit representing TTI may be called a slot, a minislot, or the like instead of a subframe.

Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. Further, the number of slots (the number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the numerology. The number of subcarriers included in the RB may be determined based on the numerology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB : PRB), a subcarrier group (Sub-Carrier Group : SCG), a resource element group (Resource Element Group : REG), PRB pair, RB pair, etc.

A resource block may be configured by one or a plurality of resource elements (Resource Element : RE). For example, one RE may be a radio resource area of one subcarrier and one symbol.

A bandwidth part (BWP) (which may be called a partial bandwidth, etc.) may represent a subset of contiguous common resource blocks (RBs) for a certain numerology in a certain carrier. Here, a common RB may be specified by RB index based on the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgement" and "decision" may include considering some operation as "judged" and "decided". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

EXPLANATION OF REFERENCE NUMERALS

| | |
|---|---|
| 10 | Radio communication system |
| 20 | NG-RAN |
| 100 | gNB |
| 200 | UE |
| 210 | Radio signal transmitting and receiving unit |
| 220 | Amplification unit |
| 230 | Modulating and demodulating unit |
| 240 | Control signal - reference signal processing unit |
| 250 | Encoding/decoding unit |
| 260 | Data transmitting and receiving unit |
| 270 | Control unit |
| 1001 | Processor |
| 1002 | Memory |
| 1003 | Storage |
| 1004 | Communication device |
| 1005 | Input device |
| 1006 | Output device |
| 1007 | Bus |

**Claims**

1. A terminal comprising:

    a receiving unit that receives, in a different frequency band differing from a frequency band including one frequency range or a plurality of frequency ranges, a downlink channel including at least one of a downlink control channel and a downlink physical broadcast channel, wherein
    the receiving unit receives the downlink channel having a phase tracking reference signal.

2. The terminal as claimed in claim 1, wherein the phase tracking reference signal is inserted into a symbol to which the downlink channel is allocated.

3. The terminal as claimed in claim 1 or 2, wherein configuration content of the phase tracking reference symbol is predefined.

4. The terminal as claimed in claim 1 or 2, wherein the receiving unit receives configuration information indicating the configuration content of the phase tracking reference signal.

5. The terminal as claimed in one of claims 1 to 4, wherein

    a plurality of carrier waveforms is supported in the downlink channel, and
    the phase tracking reference signal is configured according to a type of the carrier waveform.

FIG. 1

# FIG. 2

FR1
{15, 30, 60} kHz SCS
5~100 MHz BW

FR3

FR2
{60, 120, (240)} kHz SCS
50~400 MHz BW

FR4
Above 52.6GHz

0.41
GHz

1 GHz

7.125
GHz

10 GHz

24.25
GHz

52.6
GHz

100 GHz

f

EP 4 007 385 A1

## FIG. 3

Radio Frame (10ms)

| #0 | #1 | #2 | #3 | #4 | #5 | #6 | #7 | #8 | #9 |

Sub frame (1ms)

→ t

SUBCARRIER SPACING

15kHz: #0 #1 #2 #3 #4 #5 #6 #7 #8 #9 #10 #11 #12 #13 — Slot (14-symbol)

30kHz — Slot (14-symbol)

60kHz — Slot (14-symbol)

120kHz — Slot (14-symbol)

240kHz — Slot (14-symbol)

# FIG. 4

RADIO SIGNAL TRANSMITTING AND RECEIVING UNIT — 210

AMPLIFICATION UNIT — 220

CONTROL SIGNAL- REFERENCE SIGNAL PROCESSING UNIT — 240

MODULATING AND DEMODULATING UNIT — 230

ENCODING/ DECODING UNIT — 250

DATA TRANSMITTING AND RECEIVING UNIT — 260

CONTROL UNIT — 270

200

EP 4 007 385 A1

## FIG. 5A

Time density($L_{PT-RS}$) : 1

☒ : PDCCH
▨ : DMRS for PDSCH
▦ : PTRS

## FIG. 5B

Time density($L_{PT-RS}$) : 2

☒ : PDCCH
▨ : DMRS for PDSCH
▦ : PTRS

# FIG. 5C

Time density($L_{PT-RS}$) : 4

☐ : PDCCH
▨ : DMRS for PDSCH
▦ : PTRS

# FIG. 6

▨ : DMRS for PDSCH
▦ : PTRS

# FIG. 7

PDCCH     CCE     REG-bundle

CCE

REG-bundle

REG

DMRS →

REG = 12 subcarriers
x 1 OFDM symbol

# FIG. 8

f [PRB]

0  1  2  3  4  5  6  7  8  9  10  11  12  13  14  15  16  17  18  19

PSS

PBCH

SSS

PBCH

PBCH-DMRS

12 PRBs

20 PRBs

t [OFDM symbol]

EP 4 007 385 A1

# FIG. 9

REG-bundle size
orCCE

w/o PTRS

REG-bundle size
orCCE

PTRS

w/ PTRS

# FIG. 10

27

# FIG. 11

200

| 1001 | 1007 | 1004 |
|---|---|---|
| PROCESSOR | | COMMUNICATION DEVICE |
| 1002 | | 1005 |
| MEMORY | | INPUT DEVICE |
| 1003 | | 1006 |
| STORAGE | | OUTPUT DEVICE |

**INTERNATIONAL SEARCH REPORT**

| | International application No. |
|---|---|
| | PCT/JP2019/030076 |

A. CLASSIFICATION OF SUBJECT MATTER
Int.Cl. H04W56/00(2009.01)i, H04W72/04(2009.01)i

According to International Patent Classification (IPC) or to both national classification and IPC

B. FIELDS SEARCHED

Minimum documentation searched (classification system followed by classification symbols)
Int.Cl. H04W4/00-99/00

Documentation searched other than minimum documentation to the extent that such documents are included in the fields searched
```
Published examined utility model applications of Japan      1922-1996
Published unexamined utility model applications of Japan    1971-2019
Registered utility model specifications of Japan            1996-2019
Published registered utility model applications of Japan    1994-2019
```

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2019/064602 A1 (NTT DOCOMO, INC.) 04 April 2019, paragraphs [0003], [0018], [0036]-[0039], [0071]-[0114], [0142]-[0156], [0176]-[0214], fig. 2, 6-10, 14, 15, 18-26 (Family: none) | 1-5 |
| Y | WO 2019/130810 A1 (SHARP CORPORATION) 04 July 2019, paragraphs [0036]-[0054], [0058], [0070], [0090], [0103]-[0123], [0168]-[0171], fig. 3 (Family: none) | 1-5 |

☒ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 22.11.2019 | 10.12.2019 |

| Name and mailing address of the ISA/ Japan Patent Office 3-4-3, Kasumigaseki, Chiyoda-ku, Tokyo 100-8915, Japan | Authorized officer Telephone No. |
|---|---|

Form PCT/ISA/210 (second sheet) (January 2015)

29

**INTERNATIONAL SEARCH REPORT**

International application No.

PCT/JP2019/030076

C (Continuation). DOCUMENTS CONSIDERED TO BE RELEVANT

| Category* | Citation of document, with indication, where appropriate, of the relevant passages | Relevant to claim No. |
|---|---|---|
| Y | INTERDIGITAL INC., Discussion on Potential Waveform Solutions for NR Unlicensed, 3GPP TSG RAN WG1 Meeting #93 R1-1807040 [online], [retrieved on 21 November 2019], Retrieved from the Internet: <URL: https://www.3gpp.org/ftp/TSG_RAN/WG1_RL1/TSGR1_93/ Docs/R1-1807040.zip>, 12 May 2018, pp. 1-5, chapter 1, section 2.3 | 1-5 |
| A | QUALCOMM INCORPORATED, PT-RS Considerations, 3GPP TSG-RAN WG1 Meeting #92 R1-1802829 [online], [retrieved on 21 November 2019], Retrieved from the Internet: <URL:https://www.3gpp.org/ftp/TSG_RAN/WG1_RL1/TSGR 1_92/Docs/R1-1802829.zip>, 17 February 2018, pp. 1-6, chapter 4 | 1-5 |
| A | WO 2018/171783 A1 (HUAWEI TECHNOLOGIES CO., LTD.) 27 September 2018, page 14, line 25 to page 28, line 23, fig. 9A-12D, 14, 15 & CN 108632179 A | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3rd Generation Partnership Project; Technical Specification Group Radio Access Network; Study on requirements for NR beyond 52.6 GHz (Release 16). *3GPP TR 38.807 V0.1.0,* March 2019